# EUROPÄISCHE PATENTSCHRIFT

(11) **EP 2 062 304 B1**
(45) Veröffentlichungstag und Bekanntmachung des Hinweises auf die Patenterteilung: **27.06.2012**
(21) Anmeldenummer: 07802587.1
(22) Anmeldetag: 13.08.2007
(51) Int. Cl.: H02N 2/02, H02N 2/06

(54) **VERSTELLEINRICHTUNG MIT HOHER POSITIONSAUFLÖSUNG, AUCH IM NANO- ODER SUBNANOMETERBEREICH**
ADJUSTING DEVICE WITH HIGH POSITION RESOLUTION, EVEN IN THE NANO- OR SUBNANOMETER RANGE
DISPOSITIF D'AJUSTEMENT AVEC UNE HAUTE RÉSOLUTION DE POSITION, Y COMPRIS DANS LES PLAGES NANOMÉTRIQUE ET SUBNANOMÉTRIQUE

(30) Priorität: 14.08.2006 DE 102006038011; 20.09.2006 DE 102006044285
(43) Veröffentlichungstag der Anmeldung: 27.05.2009
(73) Patentinhaber: Physik Instrumente (PI) GmbH & Co. KG, 76228 Karlsruhe (DE)
(72) Erfinder: MARTH, Harry, 76337 Waldbronn (DE); LIANG, Rong, 76337 Waldbronn (DE); PERTSCH, Patrick, 07629 Hermsdorf (DE)
(74) Vertreter: Meissner, Bolte & Partner
(86) Internationale Anmeldenummer: PCT/EP2007/058359
(87) Internationale Veröffentlichungsnummer: WO 2008/020006

(56) Entgegenhaltungen:
- EP-A- 0 121 969
- JP-A- 2002 318 622
- MORITA T ET AL: "Fundamental study of a stacked lithium niobate transducer" JAPANESE JOURNAL OF APPLIED PHYSICS, PART 1 (REGULAR PAPERS, SHORT NOTES & REVIEW PAPERS) JAPAN SOC. APPL. PHYS JAPAN, Bd. 40, Nr. 5B, Mai 2001 (2001-05), Seiten 3801-3806, XP002460204 ISSN: 0021-4922
- XIAONING JIANG ET AL: "Advanced piezoelectric single crystal based actuators" PROCEEDINGS OF THE SPIE - THE INTERNATIONAL SOCIETY FOR OPTICAL ENGINEERING SPIE-INT. SOC. OPT. ENG USA, Bd. 5761, Nr. 1, 2005, Seiten 253-262, XP002460205 ISSN: 0277-786X
- KAWAMATA A ET AL: "Non-hysteresis and perfect linear piezoelectric performance of a multilayered lithium niobate actuator" SENSORS AND ACTUATORS A (PHYSICAL) ELSEVIER SWITZERLAND, Bd. 135, Nr. 2, 15. April 2007 (2007-04-15), Seiten 782-786, XP002460206 ISSN: 0924-4247

## Beschreibung

Die Erfindung betrifft eine Verstelleinrichtung mit hoher Positionsauflösung auch im Nano- oder Subnanometerbereich und einem Stellwege von wenigen Mikrometern bis einigen hundert Millimetern, wobei für die Hauptstellrichtungen im geschlossenen Regelkreis betriebene PZT-Festkörperaktoren eingesetzt sind, deren jeweilige Position mittels hochauflösender Sensoren bestimmbar ist und weiterhin die PZT-Festkörperaktoren über Gelenke mit einer Plattform in Verbindung stehen, gemäß Oberbegriff des Patentanspruchs 1.

Nanopositionierer auf der Basis von Festkörperaktoren gehören zum Stand der Technik. Nanopositionierer sind hierbei Verstelleinheiten, die einen Stellbereich von wenigen Mikrometern bis zu einigen Millimetern aufweisen. Dabei liegt die Positionsauflösung im Nanometer- bzw. Subnanometerbereich.

Für die Positionierbaugruppen werden zum Zweck der Vermeidung von Reibung und zur Unterdrückung von Spiel in häufigen Fällen Federgelenkführungen verwendet. Die Federgelenke können hierbei als Biegegelenke über einen Erodierschritt aus einem Metallblock erstellt werden.

Durch Fertigungstoleranzen der Bauteile, aber auch Ungenauigkeiten bei der Montage ist die Exaktheit der Führung der Federgelenke begrenzt. Typische Positionsfehler senkrecht zur Stellrichtung liegen bei Produkten des Standes der Technik im Bereich von ca. 5 nm bis 10 nm je 100 µm Stellweg.

Die Anforderungen des Marktes sind zunehmend auf Nanopositionierer mit < 2 nm Führungsgenauigkeit bei mehreren 100 µm Bewegung gerichtet. Um diese Führungsgenauigkeiten zu realisieren, ist vielfach versucht worden, durch mechanische Zusatzglieder im Sinn von Vorspannschrauben, Keilen oder dergleichen Vorspannkräfte zu erzeugen, um die Führungsgenauigkeiten zu erhöhen. Derartige mechanische Mittel, wie z.B. in der DE 198 26 984 A1 gezeigt, führen jedoch nicht zu reproduzierbaren Ergebnissen und genügen nicht den Anforderungen an die notwendige Langzeitstabilität.

Multiachsenpositionierer mit bis zu sechs Freiheitsgraden aus dem Hause Physik Instrumente (PI) GmbH & Co. KG weisen die Möglichkeit der Messung unerwünschter parasitärer Bewegungen auf, wobei die nicht als Stellrichtung definierten Achsen bei derartigen Multiachsenpositionierern zur aktiven Fehlerkorrektur benutzt werden können.

Festkörperaktoren auf der Basis einer PZT-Keramik weisen für das Erreichen großer Stellwege notwendige große Dehnungen auf, sind allerdings mit einer unerwünschten Hysterese und einem Kriechverhalten behaftet. Um die geforderte hohe Auflösung zu erreichen, ist es daher notwendig, daß jede aktive Achse mit einem hochauflösenden Sensor versehen sein muß. Weiterhin erfolgt ein Betreiben der Aktoren im geschlossenen Regelkreis. Eine derartige Technologie führt allerdings zu sehr hohen Systemkosten und ist, falls nur wenige Hauptstellrichtungen benötigt werden, am Markt kaum durchsetzbar.

Zum Stand der Technik sei auf die Druckschriften EP 0833208 A2, DE 3786955 T2, US 5,241,235 A, US 6,310,342 B1, DE 10296462 T5, US 2006/0097162 A1 und die DE 102004002199 A1 verwiesen. Hiervon betrifft die EP 0833208 A2 eine Verstelleinrichtung mit Positionsauflösung auch im Nano- oder Subnanometerbereich. Für die Hauptstellrichtungen sind im geschlossenen Regelkreis betriebene Aktoren eingesetzt, deren Position mittels Sensoren bestimmbar ist. Die Aktoren stehen mit einer Plattform in Verbindung. Weitere Aktoren dienen dem Ausgleich von Fehlern, die z.B. bedingt sind durch unterschiedliche Dicke des dort zu bearbeitenden Halbleitersubstrats. Es wird also nicht der Fehler ausgeglichen, der bedingt ist durch Positionsfehler der Verstelleinrichtung in Hauptstellrichtung. Darüber hinaus geht es bei der Anordnung der weiteren Aktoren gemäß EP 0833208 A2 um die Schaffung einer grundsätzlich weiteren Verstellmöslichkeit in einer dritten, nämlich der Z-Achse.

Weitere Vorrichtungen, die dem Stand der Technik angehören, werden in EP 0 121 969 A2 sowie in Takeshi Morita et al., "Fundamental Study of a Stacked Lithium Niobate Transducer", Jpn. J. of Appl. Phys., vol. 40, p. 3801-3806, (2001) sowie in Xiaoning Jiang et al., "Advanced Piezoelectric Single Crystal Based Actuators", Smart Structures and Materials 2005, Proceedings of SPIE, vol. 5761, p. 253-262, (2005) beschrieben.

Aus dem Vorgenannten ist es daher Aufgabe der Erfindung, eine weiterentwickelte Verstelleinrichtung mit Positionsauflösung im Nano- oder Subnanometerbereich und einem Stellweg von wenigen Mikrometern bis einigen Millimetern anzugeben, wobei eine Kompensation von störenden Positionsfehlern, die nicht in der eigentlichen Hauptstellrichtung liegen, ohne zusätzliche hochauflösende Sensoren möglich sein soll und wobei zur Ansteuerung des Positionierers keine separaten Positionsfehler-Controller notwendig werden.

Die Lösung der Aufgabe der Erfindung erfolgt mit einer Verstelleinrichtung gemäß der Merkmalskombination nach Patentanspruch 1, wobei Anspruch 5 auf ein Verfahren zum Betreiben einer derartigen Verstelleinrichtung abstellt.

Die Unteransprüche stellen mindestens zweckmäßige Ausgestaltungen und Weiterbildungen dar.

Demnach wird erfindungsgemäß zur Kompensation von störenden, z.B. senkrecht zur jeweiligen Hauptstellrichtung auftretenden Positionsfehlern auf zusätzliche Aktoren auf der Basis piezoelektrischer Einkristalle zurückgegriffen. Derartige Einkristalle, wie Quarz oder Lithiumniobat, besitzen zwar einen wesentlich geringeren Piezoeffekt gegenüber bekannten PZT-Keramiken, weisen aber dafür keine Hysterese oder ein unerwünschtes Kriechverhalten auf.

Diese zusätzlichen Aktoren auf der Basis piezoelektrischer Einkristalle werden gemäß den in einer Fehlertabelle gespeicherten Werten angesteuert, wobei sich der jeweilige Steuerwert als eine Funktion der Hauptstellachsen, jedoch mit umgekehrten Vorzeichen ergibt. Die zusätzlichen Aktoren sind über eine Korrekturplatte mit der Verstelleinrichtungs-Plattform starr verbunden.

Da die zusätzlichen Aktoren nur dafür notwendig sind, die Positionsfehler, die Werte bis zu einigen hundert Nanometern betragen, zu kompensieren, besteht die Möglichkeit, das Fehlerkorrekturmodul sehr kompakt aufzubauen und entweder in der Verstelleinrichtung zu integrieren oder optional als Nachrüstbaugruppe extern mit dem eigentlichen Versteller in Serie anzuordnen.

Bei der üblicherweise erfolgenden Ansteuerung der Verstelleinrichtung wird aus der Fehlertabelle ein Stellwert für die zusätzlichen Aktoren als Funktion der Hauptstellachsen ermittelt und dann mit umgekehrten Vorzeichen in eine Korrekturbewegung umgesetzt.

Bei dem Verfahren zum Betreiben der erfindungsgemäßen Verstelleinrichtung wird also zunächst in einem Kalibrierschritt als Funktion der Istwerte in den Hauptstellrichtungen X, Y eine Bestimmung der jeweiligen Positionsfehler abweichend, z.B. senkrecht zu den Hauptstellrichtungen ermittelt und in einer Fehlertabelle Zₙ=f(X,Y) gespeichert. Gemäß dem jeweiligen Sollwert für die Hauptstellrichtungen X, Y wird dann aus der Fehlertabelle ein Stellwert für die zusätzlichen Aktoren ermittelt und mit umgekehrten Vorzeichen in die notwendige Korrekturbewegung umgesetzt.

Regelungsschwankungen in den Korrekturachsen treten aufgrund der offenen Steuerkette nicht auf. Bei wenigen Hauptstellachsen können vorhandene Controller die Steuerung der zusätzlichen Aktoren ohne weiteres mit übernehmen.

In einer Ausgestaltung der Erfindung können die Fehlertabellen beim Anwender durch dort vorgenommene Messung an Referenzobjekten oder Referenzoberflächen angepasst werden. Insgesamt ergibt sich in Umsetzung der Erfindung eine Kostenersparnis bei der Fertigung der mechanischen Teile und Montage der Verstelleinrichtung durch die Zulässigkeit größerer Toleranzen und bedingt durch den Entfall von ansonsten notwendigen Sensoren.

Mit der Erfindung gelingt es also, Positionsfehler in den Richtungen, die nicht Hauptstellrichtungen sind, gegen null zu halten. Es werden also fehlerhafte Führungen, Deformationen bei Masseverlagerung und von ähnlichen Quellen herrührende Positionsfehler kompensiert, und zwar ohne Nutzung hochauflösender und teurer Sensoren.

Dabei sind typische Applikationen der Erfindung Scantische mit Hauptstellrichtungen in X und Y. Der Crosstalk in der XY-Ebene (Y-Fehler bei Bewegung in X-Richtung und umgekehrt) kann bestimmt und durch die Hauptaktoren korrigiert werden. In den verbleibenden Freiheitsgraden (Z senkrecht zu XY und den Verkippungen) wurden bisher weder Aktoren noch Sensoren bekannt, um Korrekturen vornehmen zu können. Für eine große Anzahl von Appl□kationen insbesondere in der Mikroskopie ist es notwendig, während der Scanbewegung den Focusabstand in Z-Richtung mit Nanometer-Genauigkeit konstant zu halten. Hier wird zur Fehlerkorrektur der Z-Achse der Z-Fehler als Funktion in den Richtungen X und Y bestimmt und ausgeglichen.

Bei einer Z-Achsen-Fokussiereinheit ist die Hauptstellachse in Z-Richtung vorliegend. Dort gibt es aber die Notwendigkeit, Positionsfehler in der YX-Ebene gering zu halten. In einem solchen Fall wird ein zweidimensionales Korrekturelement für die XY-Ebene in Form eines Scherelements eingesetzt. Dieses Scherelement wird mit Fehlertabellen X-Fehler = f(Z) und Y-Fehler = f(Z) angesteuert.

Das Fehlermapping kann für XY-Scanner-Applikationen wie folgt realisiert werden.

Zunächst findet ein Probedurchlauf mit einer frei wählbaren Anzahl m x n von Messpunkten in XY-Richtung statt. Beispielsweise werden 10X und 12Y Punkte angefahren, so dass sich insgesamt 120 Messpunkte ergeben. Die genutzte Software enthält einen Interpolationsalgorithmus, der den Z-Korrekturwert aus den nächstliegenden Stützstellen für jede beliebige kommandierte XY-Position berechnet. In dem Fall, dass der durchgeführte Probescan zu große Gradienten zwischen benachbarten Stützstellen aufweist, wird die Anzahl der Stützstellen vergrößert.

Bei einer z.B. zweiachsigen Korrektur werden für die eine Hauptstellrichtung Z jeweils Fehler pro Korrekturachse, z.B. 10X + 12Y = 22 Messpunkte ermittelt. Auch hier interpoliert die Software betrennt nach Korrekturachse zwischen den nächstliegenden Stützstellen für jede beliebige kommandierte Z-Position. Der Speicherbedarf ist bei dieser Ausführungsvariante geringer. Durch eine direkte Kommunikation zwischen dem Piezocontroller und der Fehlermessung während der Kalibration kann der vorstehend geschilderte Prozess vollautomatisch ablaufen. Es ist nicht notwendig, zusätzlichen Hardwareaufwand zu betreiben. Erfindungsgemäß steuern nur die freien bzw. ohnehin vorhandenen Verstärker für die Aktoren auch die zusätzlichen Korrekturaktoren.

Wie dargelegt, ist eine Kernidee der Erfindung auf die Verwendung von linearen Piezoaktoren, vorzugsweise aus Lithiumniobat oder anderen einkristallinen hysteresefreien Materialien zur Fehlerkorrektur gerichtet.

Hieraus stellt sich eine weitere Applikationsmöglichkeit dar. Bei Messungen mit AFM-Vorrichtungen (atomic force microscopy) können Höhenprofile im Nano- und Subnanometerbereich bestimmt werden. Befindet sich die Messspitze im Nahbereich bzw. im Kontakt mit dem Messobjekt, unterliegt ein Biegebalken aus Silizium Biegebeanspruchungen und es erzeugt der reflektierte Laserstrahl ein elektrisches Signal an einem PSD-Element (position sensitive device). Ein PID-Regler erzeugt aus dem Sensorsignal eine Regelgröße und steuert über einen Hochspannungsverstärker einen Piezoaktor derart an, dass die Messspitze einen konstanten Abstand zur Oberfläche besitzt bzw. eine konstante Andruckkraft auf die Oberfläche ausübt. Das PSD-Sensorsignal wird durch dieses Kompensationsverfahren annähernd konstant gehalten, auch wenn sich die Messoberfläche horizontal bewegt, und zwar im Sinne einer Scanbewegung. Am Reglerausgang bzw. am Ausgang des Hochspannungsverstärkers steht ein elektrisches Signal zur Verfügung, welches der Höhe der Oberflächenstruktur des Messobjekts proportional sein soll. Aufgrund von Nichtlinearitäten des Piezoaktors ergeben sich jedoch bei einem derartigen Verfahren deutliche Verzerrungen des Signals und damit Höhenmessfehler. Da die benötigten Stellwege des Piezoaktors bei AFM-Messungen im Bereich von 0,5 bis 1 µm liegen, ist es möglich, den Kerngedanken der Erfindung mit Blick auf die verwendeten Korrekturaktoren für diese Stellbereiche nach oben zu skalieren. Das vorhandene sehr gute lineare Ausdehnungsverhalten von Piezoaktoren aus einkristallinen hysteresefreien Materialien in Kombination mit einer hohen Dynamik führt zu einer deutlichen Verbesserung bei AFM-Messungen. Bisher notwendige aufwendige Linearisierungen durch eine inverse Hysteresesimulation können entfallen.

Die Erfindung soll anhand eines Ausführungsbeispiels sowie unter Zuhilfenahme von Figuren näher erläutert werden.

Hierbei zeigen:

Fig. 1 ein Blockschaltbild der Ansteuerung eines XY-Positionierers und Ermittlung von Positionsfehlern in Z-Richtung als Funktion des Sollwertvektors;

Fig. 2 ein Blockschaltbild der Ansteuerung eines XY-Positionierers in den Hauptstellrichtungen (X, Y) und eines Korrekturmoduls in Z-Richtung mit dem Ziel, den Z-Fehler zu minimieren;

Fig. 3 eine Prinzipschnittdarstellung eines Positionierers mit integriertem Korrekturmodul für eine Hauptstellrichtung X und zwei Korrekturachsen Z₁ und Z₂;

Fig. 4 einen erfindungsgemäßen Positionierer mit externem Korrekturmodul für eine Hauptstellrichtung X und zwei Korrekturachsen Z₁ und Z₂ zum Zweck der Nachrüstung und

Fig. 5 eine prinzipielle Darstellung von Korrekturaktoren mit einem, zwei und drei Freiheitsgraden in einem Element als Kombination von Dicken- und Scherwandler und mit bis zu fünf Freiheitsgraden durch Mehrfachverwendung.

Bei einem Ausführungsbeispiel werden nur die Hauptstellrichtungen (Anzahl gleich N) der Positionierer mit PZT-Festkörperaktoren und hochauflösenden Sensoren im geschlossenen Regelkreis betrieben.

Die Positionsfehler mit der maximalen Anzahl 6-N werden in einem Kalibrierungsschritt ermittelt und in einer Fehlertabelle innerhalb des ohnehin vorhandenen Controllers abgespeichert.

Weiterhin erfolgt die Verwendung von zusätzlichen Korrekturaktoren mit der Anzahl maximal 6-N, die über ausreichend große Stellwege verfügen, um Positionsfehler bis zu einigen hundert Nanometern zu kompensieren.

Als Materialien für die zusätzlichen Aktoren eignen sich piezoelektrische Einkristalle wie Quarz oder Lithiumniobat, die einen wesentlich geringeren Piezoeffekt gegenüber PZT-Keramiken aufweisen, dafür aber keine unerwünschte Hysterese oder ein Kriechverhalten besitzen.

Diese zusätzlichen Elemente können als Fehlerkorrekturmodul aufgrund der geringen Stellwege sehr kompakt aufgebaut werden und sind entweder mechanisch im Positionierer integrierbar oder optional extern mit dem Versteller verbunden.

Bei der Ansteuerung des Positionierers wird aus der vorab definierten Fehlertabelle ein Stellwert für das Fehlerkorrekturmodul als Funktion der Hauptstellachsen ermittelt und dann mit umgekehrten Vorzeichen in eine Korrekturbewegung umgesetzt.

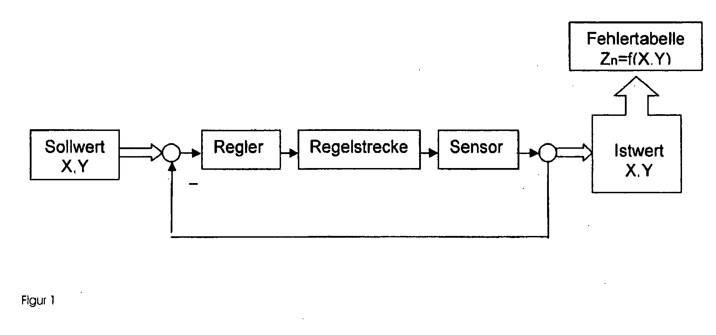

Die Fig. 1 macht deutlich, wie bei der Ansteuerung eines XY-Positionierers Positionsfehler in Z-Richtung ermittelbar sind und als Funktion des Sollwertvektors in einer Fehlertabelle abgelegt werden.

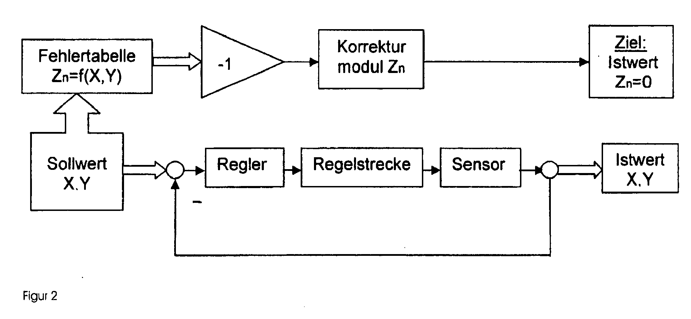

Beim Betrieb des XY-Positionierers gemäß Fig. 2 mit Ansteuerung in den Hauptstellrichtungen X, Y und mit einem Korrekturmodul in Z-Richtung gilt es nun, den Z-Fehler zu minimieren. Hierfür wird gemäß dem vorgegebenden Sollwert X, Y aus der Fehlertabelle ein Wert gelesen, der dann vorzeichennegiert auf die jeweiligen zusätzlichen Aktoren gelangt, und zwar mit dem Ziel, unerwünschte Fehler, z.B. Verkippungen in Z-Richtung zu beseitigen.

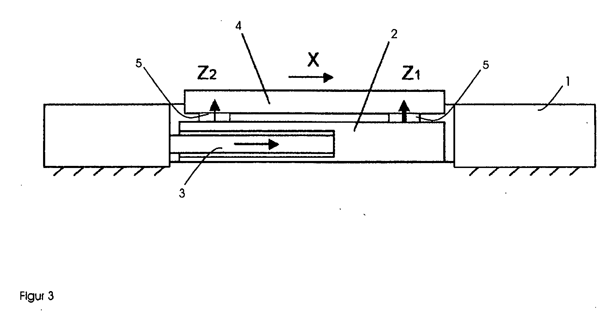

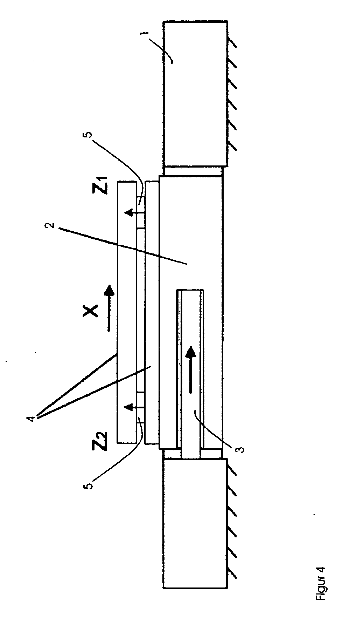

Gemäß den Darstellungen nach Fig. 3 und 4 ist in einem Rahmen 1 über Gelenke eine bewegbare Plattform 2 mit einer Hauptstellrichtung X angeordnet.

Zum Antrieb der Plattform 2 ist mindestens ein PZT-Aktor 3 vorhanden.

Bei der Darstellung nach Fig. 3 wird der dort gezeigte Positionierer mit einer integrierten Korrekturplatte 4 komplettiert, welche der Beseitigung von Fehlern in Z-Richtung dient.

Hierfür sind zwischen der Korrekturplatte 4 und der Plattform 2 zusätzliche Aktoren 5 befindlich, welche aus piezoelektrischen Einkristallen bestehen.

Diese zusätzlichen Aktoren 5 werden gemäß den Werten aus der Fehlertabelle (siehe Fig. 2) angesteuert mit dem Ziel, den Z-Fehler zu eliminieren.

Der Positionierer mit externem Korrekturmodul, umfassend zwei parallel und beanstandete Korrekturplatten 4 nach Fig. 4 ist als Nachrüstbaugruppe ausgeführt.

Bei dieser Anordnung kann das Korrekturmodul aus den zwei Platten 4 mit dazwischen befindlichen zusätzlichen Aktoren 5 nachträglich mit der Plattform 2 verbunden bzw. auf dieser angeordnet werden.

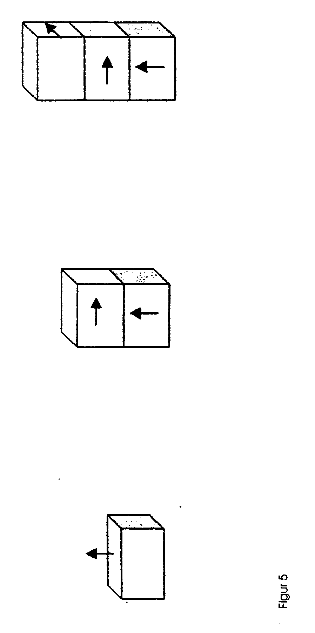

Um Korrekturen auch in mehreren Freiheitsgraden durchzuführen, besteht die Möglichkeit, ein kombiniertes Korrekturelement als Dicken- und Scherwandler auszubilden, wie dies mit der Prinzipdarstellung nach Fig. 5 gezeigt ist.

Bei einer weiteren denkbaren Applikation, z.B. einem XY-Röhrchen-Scanner, ist ebenfalls vorgesehen, ein separates Z-Korrekturmodul anzuordnen. Röhrchen-Scanner als Bestandteil eines Mikroskops führen eine Bewegung in XY-Ebene aus. Aufgrund nicht zu vermeidender Verbiegungen kommt es hier zu einem bogenförmigen Z-Fehler. In diesem Fall könnte die zu untersuchende Probe auf einen Z-Kompensator gesetzt werden, um dann im Sinn der vorliegenden Erfindung den Fehler in Z-Richtung zu eliminieren, so dass der relative Abstand zwischen der Messspitze und der Probe konstant gehalten werden kann. Erst durch diese Maßnahme kann der Anwender aus dem Messergebnis unterscheiden, ob der Fehler womöglich vom Scanner verursacht wird oder ob die Probenoberfläche tatsächlich uneben ist. Ein analoger positiver Effekt ist erzielbar, wenn der Z-Kompensator den Messkopf mit Röhrchen-Scanner in Z-Richtung kompensierend bewegt und die Probe diesbezüglich feststeht.

Bezugszeichenliste
- 1: Rahmen
- 2: Plattform
- 3: PZT-Piezoaktor
- 4: Korrekturplatte
- 5: zusätzlicher Aktor (Korrekturaktor)

## Patentansprüche

1. Verstelleinrichtung mit Positionsauflösung im Nano- oder Subnanometerbereich, wobei für die Hauptstellrichtungen (X, Y) im geschlossenen Regelkreis betriebene PZT-Festkörperaktoren (3) eingesetzt sind, deren jeweilige Position mittels hochauflösender Sensoren bestimmbar ist und weiterhin die PZT-Festkörperaktoren (3) über Gelenke mit einer Plattform (2) in Verbindung stehen,
**dadurch gekennzeichnet, dass**
zur Kompensation von außerhalb der jeweiligen Hauptstellrichtung (X, Y) in einer weiteren Richtung (Z) auftretenden und in einer Fehlertabelle gespeicherten Positionsfehlern ein Korrekturmodul mit einer Korrekturplatte (4) und zusätzlichen mittels offener Steuerkette betriebenen Aktoren (5) auf der Basis piezoelektrischer Einkristalle vorhanden ist, wobei die zusätzlichen Aktoren (5) gemäß den in einer Fehlertabelle gespeicherten Werten mittels eines Controllers ansteuerbar sind, wobei der jeweilige Steuerwert sich aus der Funktion eines Sollwertvektors von Positionsfehlern in einer weiteren Richtung (Z), jedoch mit umgekehrten Vorzeichen ergibt und die zusätzlichen Aktoren (5) mit der Plattform (2) verbunden sind.

2. Verstelleinrichtung nach Anspruch 1,
**dadurch gekennzeichnet, dass**
das Korrekturmodul auf der Basis zweier beabstandeter Korrekturplatten (4) und dazwischen befindlichen zusätzlichen Aktoren (5) nachrüstbar auf der Plattform (2) angeordnet ist.

3. Verstelleinrichtung nach Anspruch 1, oder 2,
**dadurch gekennzeichnet, dass**
die zusätzlichen Aktoren (5) einen oder mehrere Bewegungsfreiheitsgrade aufweisen.

4. Verstelleinrichtung nach einem der vorangegangenen Ansprüche,
**dadurch gekennzeichnet, dass**
die zusätzlichen Aktoren (5) zur Fehlerkorrektur aus kriech- und hysteresefreien Piezomaterialien, insbesondere Quarz- oder Lithiumniobat-Einkristallen bestehen.

5. Verfahren zum Betreiben einer Verstelleinrichtung gemäß einem der vorangegangenen Ansprüche,
**dadurch gekennzeichnet, dass**
in einem Kalibrierschritt als Funktion der Istwerte in den Hauptstellrichtungen X, Y die jeweiligen Positionsfehler abweichend von den Hauptstellrichtungen ermittelt und in einer Fehlertabelle Zₙ=f(X,Y) gespeichert werden und gemäß dem jeweiligen Sollwert für die Hauptstellrichtungen (X, Y) aus der Fehlertabelle ein Stellwert für die zusätzlichen Aktoren (5) ermittelt und mit umgekehrten Vorzeichen in eine Korrekturbewegung umgesetzt wird.

## Claims

1. Adjusting device with a position resolution in the nano- or subnanometer range, wherein PZT solid-state actuators (3) operated in the closed loop are used for the main operating directions (X, Y), the respective position of which can be determined by means of high-resolution sensors, and wherein further the PZT solid-state actuators (3) communicate via joints with a platform (2),
**characterized in that**
for the compensation of position errors occurring externally of the respective main operating direction (X, Y) in a further direction (Z) and stored in an error table a correction module with a correction plate (4) and additional actuators (5) on the basis of piezoelectric monocrystals, operated by means of an open-loop control, is present, wherein the additional actuators (5) can be actuated by means of a controller according to the values stored in an error table, wherein the respective control value is obtained from the function of a set value vector of position errors in a further direction (Z), however subject to sign reversal, and the additional actuators (5) are connected to the platform (2).

2. Adjusting device according to claim 1,
**characterized in that**
a correction module on the basis of two spaced-apart correction plates (4) and additional actuators (5) positioned therebetween is arranged on the platform (2) in a retrofittable manner.

3. Adjusting device according to claim 1 or 2,
**characterized in that**
the additional actuators (5) have one or more degrees of freedom of motion.

4. Adjusting device according to one of the preceding claims,
**characterized in that**
the additional actuators (5) for the correction of errors are made of creep- and hysteresis-free piezoelectric materials, specifically quartz or lithium niobate monocrystals.

5. Method for operating an adjusting device according to one of the preceding claims,
**characterized in that**
the respective position errors deviating from the main operating directions are determined in a calibrating step as a function of the actual values in the main operating directions X, Y and are stored in an error table Zₙ=f(X,Y), and that in accordance with the respective set value for the main operating directions (X, Y) a correction value for the additional actuators (5) is determined from the error table and, subject to a sign reversal, is converted to a correcting movement.

## Revendications

1. Dispositif d'ajustement avec une résolution de position dans la plage nanométrique et subnanométrique, dans lequel on emploie des acteurs à corps solide PZT (3) fonctionnant en circuit de régulation fermé, pour les directions d'ajustement principales (X, Y), dont la position respective est susceptible d'être déterminée au moyen de capteurs à haute résolution, et dans lequel les acteurs à corps solide PZT (3) sont en outre en liaison avec une plate-forme (2) via des articulations,
**caractérisé en ce que**
pour la compensation d'erreurs de position qui apparaissent dans une autre direction (Z) à l'extérieur de la direction d'ajustement principale (X, Y) respective et qui sont mémorisées dans un tableau d'erreur, il est prévu un module de correction avec une plaque de correction (4) et des acteurs additionnels (5), fonctionnant au moyen d'une chaîne de commande ouverte, sur la base de monocristaux piézoélectriques, dans lequel les acteurs additionnels (5) sont susceptibles d'être pilotés au moyen d'un contrôleur selon des valeurs mémorisées dans un tableau d'erreurs, et la valeur de commande respective résulte de la fonction d'un vecteur de valeur de consigne d'erreur de position dans une autre direction (Z), mais avec un signe opposé, et les acteurs additionnels (5) sont reliés à la plate-forme (2).

2. Dispositif d'ajustement selon la revendication 1,
**caractérisé en ce que** le module de correction est agencé sur la plate-forme (2) de manière à pouvoir être installé a posteriori en se basant sur deux plaques de correction (4) écartées et sur des acteurs additionnels (5) qui se trouvent entre celles-ci.

3. Dispositif d'ajustement selon la revendication 1 ou 2,
**caractérisé en ce que** les acteurs additionnels (5) présentent un ou plusieurs degrés de liberté en déplacement.

4. Dispositif d'ajustement selon l'une des revendications précédentes,
**caractérisé en ce que** les acteurs additionnels (5) destinés à la correction d'erreurs sont constitués à partir de piézo-matériaux dépourvus de fluage et dépourvus d'hystérésis, en particulier des monocristaux de quartz ou de niobate de lithium.

5. Procédé pour le fonctionnement d'un dispositif d'ajustement selon l'une des revendications précédentes,
**caractérisé en ce que**, dans une étape de calibrage, on détermine les erreurs de position respectives qui s'écartent des directions d'ajustement principales en tant que fonction des valeurs réelles dans les directions d'ajustement principales (X, Y), et on les mémorise dans un tableau d'erreurs Zₙ=f(X,Y), et on détermine selon la valeur de consigne respective pour les directions d'ajustement principales (X, Y) à partir du tableau d'erreurs une valeur d'ajustement pour les acteurs additionnels (5) et on la convertit en un mouvement de correction avec un signe opposé.
